(19) **Europäisches Patentamt**
**European Patent Office**
**Office européen des brevets**

(11) **EP 4 752 596 A1**

(12) **EUROPEAN PATENT APPLICATION**

(43) Date of publication:
03.06.2026 Bulletin 2026/23

(51) International Patent Classification (IPC):
*G01S 7/486* (2020.01)  *G01S 7/487* (2006.01)

(21) Application number: 25219412.1

(22) Date of filing: 28.11.2025

(52) Cooperative Patent Classification (CPC):
G01S 7/4868; G01S 7/487

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 02.12.2024 US 202418965812

(71) Applicant: STMicroelectronics International N.V.
1228 Plan-les-Ouates, Geneva (CH)

(72) Inventors:
• MCLEOD, Stuart
EDINBURGH, EH128QF (GB)
• HALL, Duncan
EDINBURGH, EH10 7HD (GB)

(74) Representative: Cabinet Beaumont
4, Place Robert Schuman
B.P. 1529
38025 Grenoble Cedex 1 (FR)

(54) **DYNAMIC INTEGRATION TIME CONTROLLER FOR TIME-OF-FLIGHT RANGING SYSTEMS**

(57)    According to an embodiment, a system can dynamically control integration time in a time-of-flight (ToF) device based on current operating conditions. A signal scaler processes calibration data and real-time measurements to determine expected signal and ambient rates. Parallel calculations determine required integration times-one based on achieving maximum ranging distance and another based on measurement precision requirements. The system selects the longer integration time and applies user-defined bounds to optimize power consumption while maintaining specified performance. By adapting integration time to ambient light conditions and target reflectance characteristics, the system enables shorter integration times in favorable conditions while automatically increasing duration when needed for distant or low-reflectance targets.

600

602 RECEIVE INPUT DATA

604 CALCULATE EXPECTED SIGNAL AND AMBIENT RATES

606 CALCULATE DISTANCE BASED INTEGRATION TIME

608 CALCULATE SIGMA BASED INTEGRATION TIME

610 SELECT DESIRED INTEGRATION TIME

612 CONFIGURE TOF WITH SELECTED INTEGRATION TIME

FIG. 6

**Description**

Technical Field

The present disclosure generally relates to time-of-flight ranging systems and, in particular embodiments, to dynamic control of integration time in time-of-flight devices.

Background

Distance measurement systems have utilized various techniques, from ultrasonic methods to optical approaches. Among optical measurement technologies, time-of-flight (ToF) methods leverage high-speed light pulses for precise distance determination.

Advancements in semiconductor technology have enabled the development of specialized light sources like Vertical Cavity Surface Emitting Lasers (VCSELs). These light sources can generate short-duration pulses with precise timing. Similarly, detector technology has progressed with devices such as Single-Photon Avalanche Diodes (SPADs) that can detect individual photons with high temporal resolution.

Integration time has represented a key parameter in optical measurement systems. In photography, integration time determines exposure duration. In scientific instruments, integration time affects measurement sensitivity and noise levels. Similar principles apply to distance measurement systems, where extended integration periods can allow for more signal accumulation.

Ambient light conditions have historically challenged optical measurement systems. Natural and artificial lighting can introduce background photons that may affect measurements. Different applications face varying levels of ambient light. For example, indoor industrial environments may have controlled lighting, while automotive applications can experience extreme variations in ambient conditions.

Object reflectance characteristics have long been considered in optical measurements. Materials can exhibit different reflective properties, from diffuse to specular reflection. Surface characteristics, color, and material composition may influence how much light returns to a detector.

Mobile and portable applications have driven advances in power management techniques across many electronic systems. Battery-powered devices benefit from reduced power consumption while maintaining performance. Power optimization techniques have evolved from simple duty cycling to sophisticated adaptive control methods.

Signal processing in measurement systems has advanced alongside improvements in digital processing capabilities. Modern systems can perform complex real-time calculations, enabling sophisticated measurement data analysis. Digital processing can compensate for various measurement conditions and system non-idealities.

Summary

Technical advantages are generally achieved by embodiments of this disclosure, which describe dynamic control of integration time in time-of-flight devices.

An embodiment provides a system for controlling integration time in a time-of-flight (ToF) device, the system comprising:

   a distance parameter calculator circuit configured to calculate a first integration time;
   a sigma parameter calculator circuit configured to calculate a second integration time based; and
   an integration time controller configured to select a desired integration time based on the first and second integration times,
   wherein the ToF device is configured to operate at the desired integration time.

An embodiment provides a method for controlling integration time in a time-of-flight (ToF) device, the method comprising:

   calculating a first integration time based on a distance parameter;
   calculating a second integration time based on a sigma parameter;
   selecting a desired integration time based on the first and second integration times; and
   configuring the ToF device to operate at the desired integration time.

An embodiment provides a non-transitory computer-readable storage media storing computer instructions for determining integration time in a time-of-flight (ToF) device that, when executed by a processor, causes the processor to:

calculate a first integration time based on a distance parameter;
calculate a second integration time based on a sigma parameter;
select a desired integration time based on the first and second integration times; and
output the desired integration time for configuring the ToF device.

According to an embodiment, the system further comprises a signal scaler circuit configured to perform, or the method further comprising, or the media when executed by a processor causes the processor to perform:

receiving calibration data and user inputs; and
calculating an expected signal rate and ambient rate, wherein the calculation of said first integration time uses the expected signal rate and ambient rate; and
wherein the calculation of said second integration time uses using the expected signal rate, ambient rate, and maximum sigma.

A first aspect relates to a system for controlling integration time in a time-of-flight (ToF) device, the system comprising a signal scaler configured to receive calibration data and user inputs, and calculate an expected signal rate and ambient rate; a distance parameter calculator configured to calculate a first integration time based on the expected signal rate and ambient rate; a sigma parameter calculator configured to calculate a second integration time based on the expected signal rate, ambient rate, and maximum sigma; and an integration time controller configured to select a desired integration time based on the first and second integration times, wherein the ToF device is configured to operate at the desired integration time.

A second aspect relates to a method for controlling integration time in a time-of-flight (ToF) device, the method comprising receiving calibration data and user inputs;

calculating an expected signal rate and ambient rate;
calculating a first integration time based on a distance parameter using the expected signal rate and ambient rate;
calculating a second integration time based on a sigma parameter using the expected signal rate, ambient rate, and maximum sigma;
selecting a desired integration time based on the first and second integration times; and configuring the ToF device to operate at the desired integration time.

A third aspect relates to a non-transitory computer-readable storage media storing computer instructions for determining integration time in a time-of-flight (ToF) device that, when executed by a processor, causes the processor to receive calibration data and user inputs; calculate an expected signal rate and ambient rate; calculate a first integration time based on a distance parameter using the expected signal rate and ambient rate; calculate a second integration time based on a sigma parameter using the expected signal rate, ambient rate, and maximum sigma; select a desired integration time based on the first and second integration times; and output the desired integration time for configuring the ToF device.

Embodiments can be implemented in hardware, software, or any combination thereof.

Brief Description of the Drawings

For a more complete understanding of the present disclosure and the advantages thereof, reference is now made to the following descriptions taken in conjunction with the accompanying drawings, in which:

Figure 1 is a block diagram of an embodiment integration time controller;

Figure 2 is a block diagram of an embodiment signal scaler circuit;

Figure 3 is block diagram of an embodiment inverse distance calculator circuit;

Figure 4 is a block diagram of an embodiment inverse sigma calculator circuit;

Figure 5 is a block diagram of an embodiment selection/limiting logic circuit;

Figure 6 is a flow chart of an embodiment method; and

Figure 7 is a block diagram of an embodiment system.

Detailed Description of Illustrative Embodiments

This disclosure provides many applicable inventive concepts that can be embodied in a wide variety of specific contexts. The particular embodiments are merely illustrative of specific configurations and do not limit the scope of the claimed embodiments. Features from different embodiments may be combined to form further embodiments unless noted otherwise. Various embodiments are illustrated in the accompanying drawing figures, where identical components and elements are identified by the same reference number, and repetitive descriptions are omitted for brevity.

Variations or modifications described in one of the embodiments may also apply to others. Further, various changes, substitutions, and alterations can be made herein without departing from the spirit and scope of this disclosure as defined by the appended claims.

While the inventive aspects are described primarily in the context of time-of-flight ranging systems for autofocus (AF) assist, augmented reality/virtual reality (AR/VR), and proximity detection applications, it should also be appreciated that these inventive aspects may also apply to other applications. In particular, aspects of this disclosure may similarly apply to any ToF system where power consumption optimization is desired while maintaining specified ranging performance requirements, such as automotive sensing, consumer electronics, and industrial automation applications.

ToF devices measure distances by detecting reflected light pulses from objects. In low ambient light conditions, they can achieve longer-ranging distances and better measurement precision than in high ambient light conditions. The variation in performance occurs because ambient light introduces additional noise that affects the measurements.

Integration time in ToF devices represents how long the device samples for each measurement. A longer integration time improves measurement quality but increases power consumption since the device remains active longer. Traditionally, ToF devices use fixed integration times that ensure performance under worst-case conditions, which may waste power when conditions are more favorable.

Aspects of the disclosure relate to dynamically adjusting integration time based on current conditions and user requirements. In embodiments, the approach begins with device calibration under known conditions by, for example, measuring signal strength for a target with known reflectance at a known distance. The calibration data provides a reference point for calculating required integration times under different operating conditions. A signal scaling component adjusts the calibration measurements for different target reflectances and distances.

In embodiments, two parallel calculations determine the required integration time. The first calculation determines the integration time needed to achieve a specified maximum ranging distance with a minimum target reflectance. The second calculation determines the integration time needed to achieve a specified measurement precision. The calculations account for current ambient light levels measured by the device. A controller can compare the calculated integration times and select the longer one, ensuring performance requirements are met. The integration time chosen may also be bound by user-specified minimum and maximum limits.

Accordingly, in embodiments, a device can use shorter integration times in low-light conditions or when measuring highly reflective nearby objects, reducing power consumption. The integration time can automatically increase in bright conditions or when measuring distant or less reflective objects to maintain specified performance. Based on current ambient light levels, the calculations can be updated at each measurement frame (i.e., on the fly). These and additional details are further detailed below.

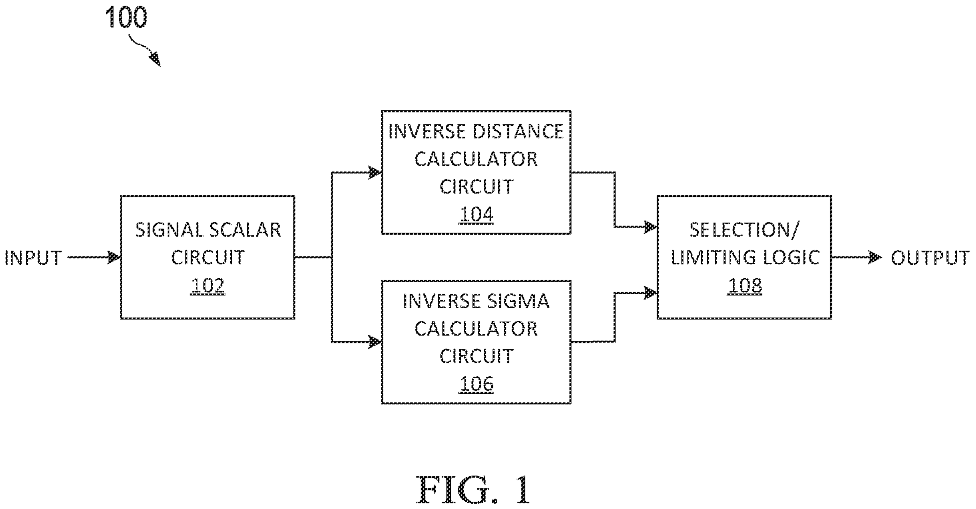

Figure 1 illustrates a block diagram of an embodiment integration time controller 100 according to aspects of the disclosure. The integration time controller 100 includes a signal scaler circuit 102, an inverse distance calculator circuit 104, an inverse sigma calculator circuit 106, and a selection/limiting logic circuit 108, which may (or may not) be arranged as shown. Integration time controller 100 may include additional components that are not shown.

Figure 1 illustrates an example of a dynamic integration time controller for ToF devices. The process begins with calibrating the signal rate per Single-Photon Avalanche Diode (SPAD) for a given target reflectance and distance. For example, the calibration might be performed using a target with 17% reflectance at a distance of 400mm.

The next step involves scaling the signal rate per SPAD based on the target reflectance. This allows the system to determine the expected signal for a target of desired minimum reflectance at the same distance as the calibration. For example, if the system is calibrated with a 17% reflective target but needs to operate with a 5% reflective target, the signal would be scaled by a factor of 5/17.

Next, the signal rate per SPAD is scaled for the desired maximum distance using the inverse square law of light propagation. For example, if the calibration is performed at 400mm but the system needs to operate at a maximum distance of 1600mm, the signal would be scaled by a factor of $\left(\frac{1}{4}\right)^2$, as the light intensity decreases with the square of the distance.

With the signal rate known for the desired maximum distance, the system calculates the integration time needed to enable target detection above the ambient noise floor. The calculation considers the ambient noise floor, scaled from the current ambient rate and current reflectance estimate for the desired minimum reflectance.

The system determines the integration time to achieve a specified range standard deviation by using the calculated signal rate at the desired maximum distance. The calculation considers the expected signal and ambient light levels for a target with the desired minimum reflectance at the desired maximum distance.

The process allows the ToF device to adjust the integration time dynamically based on current conditions, optimizing power consumption while maintaining the required performance specifications.

The signal scaler circuit 102 can receive user inputs, including minimum reflectance (REF), maximum sigma, minimum value (MIN) of the maximum ranging distance (DMAX), minimum integration time-bound, and maximum integration time-bound.

The minimum reflectance (REF) specifies the percentage of light reflected from target objects. In embodiments, the minimum reflectance (REF) is set to 54%. The maximum sigma specifies the standard deviation in the range measurement. The maximum ranging distance (DMAX) is the farthest distance the ToF device can detect a target with the specified minimum reflectance (REF). The minimum and maximum integration time-bounds are the lower and upper limits on integration time for measurement rate control.

The signal scaler circuit 102 may also receive calibration data, such as calibrated distance (DCAL), signal strength at the calibration distance (SDCAL), and reflectance at calibration (REFDCAL). The calibrated distance (DCAL) is a reference distance at which initial calibration measurements are taken. The signal strength at the calibration distance (SDCAL) is the peak signal rate measured at the calibration distance for a target of known reflectance. In embodiments, the signal strength at the calibration distance (SDCAL) is provided as events per second per SPAD (events/s.SPAD). The reflectance at calibration (REFDCAL) is the reflectance percentage of the target used during calibration.

The calibration process sets up the integration time controller 100 for optimal performance. In embodiments, the signal strength at a known distance with a target of known reflectance is measured. For example, the calibration can be performed using a target with 17% reflectance at a distance of 400mm. These specific values are chosen as they represent typical conditions for many applications, though the system can be calibrated with different values if required for specific use cases.

The system measures the peak signal rate at the calibration distance during calibration. This measurement is typically provided in events per second per SPAD (Single-Photon Avalanche Diode). The calibration data, including the calibrated distance (DCAL), signal strength at the calibration distance (SDCAL), and reflectance at calibration (REFDCAL), can be stored and used as reference points for subsequent calculations.

The calibration process allows the system to establish a baseline for signal strength under known conditions. This baseline is then used to scale calculations for different target reflectances and distances during operation. The system can more accurately estimate signal strengths and required integration times for various real-world scenarios by starting from a known reference point.

The system can dynamically adjust integration times by using the calibration data and real-time measurements. Combining pre-calibrated data and live measurements enables the system to adapt to changing conditions while maintaining a reliable reference point.

The signal scaler circuit 102 can receive real-time measurements from the current target, including ambient light levels (CURRENT AMBIENT) and reflectance estimates (CURRENT REF). In embodiments, the ambient light levels are provided as events per second per SPAD.

The signal scaler circuit 102 may also receive pulse start and end parameters from a pulse segmenter. These generally define static configuration parameters optimized for finding a given pulse from the detector during device characterization. The pulse segmenter parameters affect how the signal and ambient rates are scaled for the inverse calculations.

The signal scaler circuit 102 scales these inputs based on the relationship between calibrated conditions and desired operating conditions, accounting for target reflectance differences, pulse segmenter configuration, and the inverse square law of distance.

The scaled outputs can include the expected signal rate at the maximum ranging distance for desired minimum reflectance and the expected ambient rate at the maximum ranging distance, incorporating the pulse segmenter parameters in the calculations. These scaled values are provided to the inverse distance calculator circuit 104 and the inverse sigma calculator circuit 106 as inputs.

Although not shown as a separate component in Figure 1, the pulse segmenter operates as part of a ToF sensor system, working in conjunction with the signal scaler circuit 102 to optimize the detection and processing of light pulses.

The pulse segmenter defines static configuration parameters for identifying and analyzing the returned light pulses from the detector. The parameters can be optimized during device characterization to ensure the system can effectively locate and measure the relevant portions of the returned signal. The pulse start and end parameters, in particular, can help define the temporal window in which the system expects to receive the reflected light pulse.

In the context of the integration time controller 100, the pulse segmenter parameters influence how the signal and ambient rates are scaled for the inverse calculations. By defining the pulse boundaries, the pulse segmenter helps separate the actual signal from background noise and ambient light, improving the accuracy of subsequent calculations.

The integration time controller 100 receives the pulse segmenter parameters as inputs, allowing it to adjust its calculations based on the specific pulse characteristics being used. The integration ensures that the dynamic adjustments to integration time are made with a full understanding of how the light pulses are being emitted and detected, leading to more accurate and efficient operation of the ToF device.

It's important to note that while the pulse segmenter parameters are generally static and set during device characterization, they play a dynamic role in the ongoing calculations performed by the integration time controller. By incorporating these parameters, the system can maintain optimal performance across various operating conditions and measurement scenarios.

The inverse distance calculator circuit 104 receives the scaled signal rate and ambient rate from the signal scaler circuit 102. Using these inputs, the first integration time is calculated based on the minimum distance requirement. The calculation can account for signal confidence levels and ambient noise floor assumptions aligned with histogram processing requirements.

The inverse sigma calculator circuit 106 receives the exact scaled and ambient rates from the signal scaler circuit 102. Using these inputs and the maximum sigma specification, the inverse sigma calculator circuit 106 may calculate a second integration time based on the precision requirement. The calculation can incorporate pulse width parameters and bin width settings from the ToF device.

The selection/limiting logic circuit 108 receives the calculated integration times from the inverse distance calculator circuit 104 and inverse sigma calculator circuit 106. It compares them to determine which requirement may be more constraining. When the sigma-based integration time exceeds the distance-based integration time, the selection/limiting logic circuit 108 may select the sigma-based value and set a limiting flag. The selection/limiting logic circuit 108 can ensure the integration chosen time falls within the specified minimum and maximum bounds before outputting the final desired integration time value.

The integration time controller 100 is configured to dynamically adjust the integration time of the host ToF device to the minimum required to achieve specified performance metrics, thereby minimizing power consumption while maintaining the required ranging capabilities. Dynamic adjustment is advantageous when ambient light conditions or target reflectance properties vary, allowing the device to adapt to changing environmental conditions in real time.

The integration time controller 100 can calculate the optimal integration time needed to meet user-specified parameters such as target reflectance, maximum ranging distance, and desired range precision (sigma). The approach allows for a more nuanced and efficient control of the ToF device compared to static or simplistic methods. For example, this dynamic system continuously optimizes the device's operation instead of using fixed integration times that may waste power in favorable conditions or fail to meet performance requirements in challenging environments.

The integration time controller 100 balances the trade-offs between power consumption, ranging distance, and measurement precision, ensuring that the ToF device operates at peak efficiency across a wide range of scenarios.

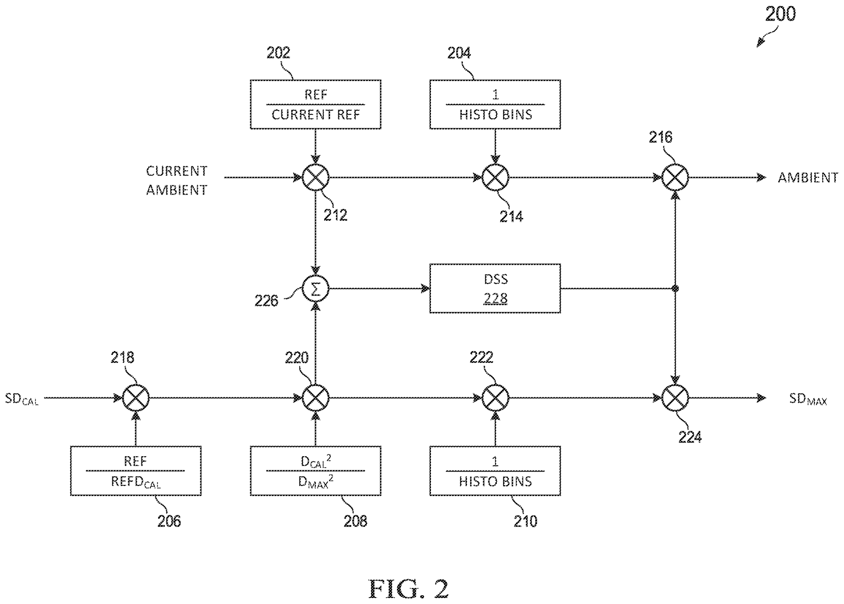

Figure 2 illustrates a block diagram of an embodiment signal scaler circuit 200, which may be implemented as the signal scaler circuit 102. The signal scaler circuit 200 includes a first scaling ratio circuit 202, a second scaling ratio circuit 204, a third scaling ratio circuit 206, a fourth scaling ratio circuit 208, a fifth scaling ratio circuit 210, a first multiplier circuit 212, a second multiplier circuit 214, a third multiplier circuit 216, a fourth multiplier circuit 218, a fifth multiplier circuit 220, a sixth multiplier circuit 222, a seventh multiplier circuit 224, a summing circuit 226, and a dynamic signal scaling (DSS) circuit 228, which may (or may not) be arranged as shown. Signal scaler circuit 200 may include additional components not shown.

The signal scaler circuit 200 is configured to process various inputs to generate scaled outputs for subsequent calculations. The circuit receives several inputs, including calibration data, user-specified parameters, and current measurements from the ToF device.

The signal scaler circuit 200 begins by processing the ambient light levels through a series of scaling operations. First, it applies a scaling factor equal to the minimum and current reflectance estimate ratio. The scaled ambient signal is normalized by dividing it by the number of histogram bins used in the ToF device, converting the per-SPAD rates to per-bin rates.

Further, the circuit processes the signal strength at the calibration distance. It scales this value by the ratio between the minimum reflectance and the reflectance at calibration. The resulting value is further scaled based on the inverse square law of light propagation, using the ratio between the calibrated distance squared and the maximum ranging distance squared. This process accounts for the difference in signal strength between the calibration distance and the desired maximum ranging distance.

The signal scaler circuit 200 then combines the distance-scaled signal with the scaled ambient signal. This combined signal is processed to generate an effective SPAD scaling value, by incorporating safety factors and target rates specific to the ToF device.

The final outputs of the signal scaler circuit are the ambient output signal and the expected signal rate. The ambient output signal represents the expected ambient rate at the maximum ranging distance for a target of minimum reflectance. The expected signal rate represents the expected signal rate at the maximum ranging distance for a target of minimum reflectance. In embodiments, these outputs are provided in events per second per bin.

By performing the scaling operations, the signal scaler circuit 200 adapts the calibration measurements to current operating conditions, accounting for differences in reflectance, distance, and ambient light levels. These scaled outputs are used in subsequent calculations performed by the inverse distance calculator and inverse sigma calculator circuits.

The signal scaler circuit 200 processes the ambient light levels (CURRENT AMBIENT) through a series of scaling operations. The first scaling ratio circuit 202 provides a first scaling factor equal to the ratio between the minimum reflectance (REF) and the reflectance estimates (CURRENT REF) using, for example, a reflectance estimator. The first multiplier circuit 212 scales the ambient light levels by the first scaling factor provided by the first scaling ratio circuit 202 to provide a scaled ambient signal.

The reflectance estimation process provides real-time input for ambient light scaling calculations. The system can continuously estimate the reflectance of the current target being measured, allowing it to scale the ambient light signal by the ratio of the calibrated reflectance to the desired reflectance.

The reflectance estimator, which is not explicitly shown in Figure 2 but feeds into the signal scaler circuit 200, uses data from the ToF sensor to approximate the reflectivity of the target object. The estimation can be based on the strength of the returned signal relative to the emitted signal, considering factors such as the known emission power and the measured distance to the target. The reflectance estimator can provide continuous updates to maintain accurate ambient light scaling as the sensor moves from one target to another with different reflective properties.

The reflectance estimation process enables proper ambient light scaling across a wide range of target materials by providing the ratio needed to scale the ambient light signal based on the difference between calibrated and actual target reflectance.

The second scaling ratio circuit 204 provides a second scaling factor equal to the inverse of the number of histogram bins (i.e., $\frac{1}{HISTO\ BINS}$). The second multiplier circuit 214 normalizes the output of the first multiplier circuit 212 by the second scaling factor provided by the second scaling ratio circuit 204. The second multiplier circuit 214 converts the per-SPAD rates to per-bin rates.

The third scaling ratio circuit 206 provides a third scaling factor equal to the ratio between the minimum reflectance (REF) and the reflectance at calibration (REFDCAL). The fourth multiplier circuit 218 scales the signal strength at the calibration distance (SDCAL) by the third scaling factor (i.e., $\frac{REF}{REFD_{CAL}}$) provided by the third scaling ratio circuit 206.

The fourth scaling ratio circuit 208 provides a fourth scaling factor equal to the ratio between the calibrated distance (DCAL) squared and the maximum ranging distance (DMAX) squared. The inverse square law of light determines this ratio. For example, if calibrated at 400mm but measuring at 1600mm, the signal reduces by 1/16 $\left(\frac{400}{1600}\right)^2$, as light intensity decreases with the square of distance. The fifth multiplier circuit 220 scales the output of the fourth multiplier circuit 218 by the fourth scaling factor (i.e., $\frac{D_{CAL}^2}{D_{MAX}^2}$) provided by the fourth scaling ratio circuit 208 to provide a distance-scaled signal at the output of the fifth multiplier circuit 220.

The summing circuit 226 combines the distance-scaled signal with a scaled ambient signal (output of the first multiplier circuit 212) to provide an input to the DSS circuit 228. The DSS circuit 228 processes the combined signal to generate an effective SPAD scaling value, incorporating safety factors and target rates for the ToF device. The third multiplier circuit 216 multiplies the effective SPAD value by the scaling result from the second multiplier circuit 214 to generate an ambient output signal (AMBIENT). The ambient output signal is the expected ambient rate at the maximum ranging distance (DMAX) for a target of minimum reflectance (REF). In embodiments, the ambient output signal is provided as events per second per bin (events/s.bin).

U.S. Patent Application No. 15/709,791, titled "Circuit and Method for Controlling a SPAD Array," owned by the same assignee, is hereby incorporated by reference herein in its entirety. The incorporated application discloses a dynamic signal scaling (DSS) that controls SPAD array event rates. Specifically, the DSS enables and disables individual SPADs to maintain the combined event rate at the OR tree, where events from individual SPADs are logically ORed together below a predetermined threshold. The threshold can be set using a safety factor relative to the theoretical maximum OR tree rate. For example, a safety factor of ten (i.e., 10) maintains the event rate below one-tenth of the theoretical maximum OR tree rate. The safety margin helps prevent non-linearities in range measurements when the total peak rate, including signal and ambient events, approaches the OR tree's maximum rate capability.

Like the second scaling ratio circuit 204, the fifth scaling ratio circuit 210 provides a fifth scaling factor equal to the inverse of the number of histogram bins (i.e., $\frac{1}{HISTO\ BINS}$ ). The sixth multiplier circuit 222 normalizes the distance-scaled signal at the output of the fifth multiplier circuit 220 by the fifth scaling factor provided by the fifth scaling ratio circuit 210. The sixth multiplier circuit 222 converts the per-SPAD rates to per-bin rates.

The number of histogram bins can impact how the ToF device processes and analyzes the returned light signals. In the signal scaler circuit 200, the second scaling ratio circuit 204 and the fifth scaling ratio circuit 210 provide scaling factors equal to the inverse of the number of histogram bins. The scaling operation, performed by the second multiplier circuit 214 and the sixth multiplier circuit 222, converts the per-SPAD rates to per-bin rates. The conversion can be necessary because the ToF sensor's raw data is typically collected on a per-SPAD basis, but the subsequent processing and analysis are often more efficiently performed on a per-bin basis.

The number of histogram bins can vary depending on the specific ToF device configuration and requirements. Common values might include 32, 64, or 128 bins, though other values are possible. The choice of bin count affects the measurements' temporal resolution and the signal processing's computational complexity.

Bin normalization can be advantageous because it allows the system to work with consistent units throughout the calculation process. By normalizing the signals to a per-bin basis, the system can more accurately compare and combine different measurements, regardless of the specific SPAD array configuration or the number of active SPADs during a given measurement.

Further, using histogram bins helps manage the trade-off between measurement precision and processing efficiency. A larger number of bins can provide finer temporal resolution but may require more computational resources, while fewer bins can speed up processing at the cost of some precision. The integration time controller 100 can be configured to work effectively across different bin configurations, adapting its calculations to the specific histogram structure being used.

It's worth noting that the bin width, which is related to the number of bins and the overall measurement window, can also impact the precision of the ToF measurements. The system can consider this when performing its calculations, ensuring that the integration time adjustments are appropriate for the temporal resolution provided by the chosen bin configuration.

The seventh multiplier circuit 224 applies the effective SPAD scaling value from the DSS circuit 228 to the output of the sixth multiplier circuit 222 to generate the expected signal rate (SDMAX) at the maximum ranging distance (DMAX) for a target of minimum reflectance (REF). In embodiments, the expected signal rate (SDMAX) is provided as events per second per bin (events/s.bin).

Accordingly, the signal scaler circuit 200 generates two outputs: the ambient output signal representing the scaled ambient light rate and the expected signal rate representing the expected signal rate at the maximum ranging distance. The scaled values incorporate adjustments for reflectance differences, distance scaling according to the inverse square law, histogram bin normalization, and effective SPAD scaling factors. The inverse distance calculator circuit 104 and the inverse sigma calculator circuit 106 use the scaled outputs from the signal scaler circuit 200 to determine their respective integration times, effectively adapting the calibration measurements to current operating conditions.

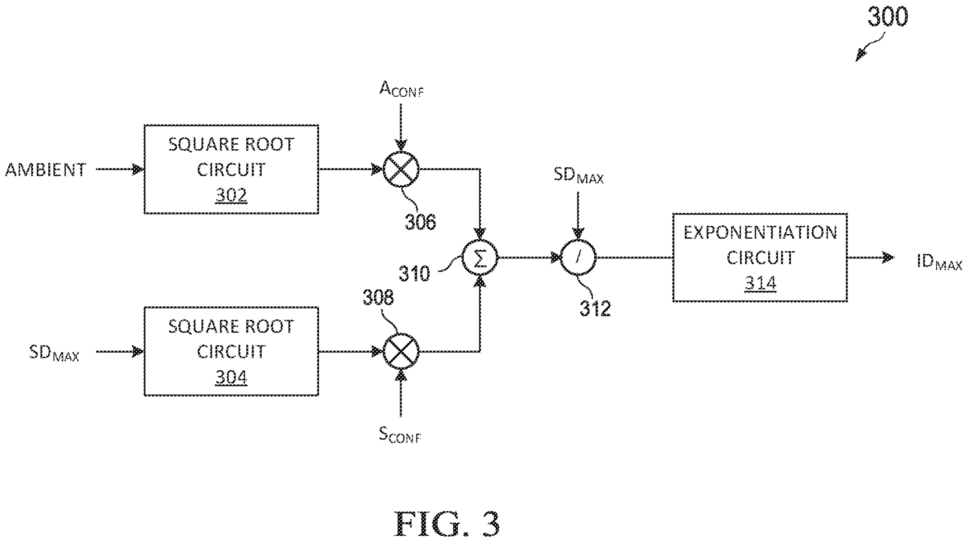

Figure 3 illustrates a block diagram of an embodiment inverse distance calculator circuit 300, which can be implemented as the inverse distance calculator circuit 104. The inverse distance calculator circuit 300 includes a first square root circuit 302, a second square root circuit 304, a first multiplier circuit 306, a second multiplier circuit 308, a summing circuit 310, a division circuit 312, and an exponentiation circuit 314, which may (or may not) be arranged as shown. Inverse distance calculator circuit 300 may include additional components not shown.

The inverse distance calculator circuit 300 is configured to compute the inverse distance integration time based on inputs from the signal scaler circuit. The circuit receives the ambient output signal and the expected signal rate at the maximum ranging distance, both provided in events per second per bin.

The inverse distance calculator circuit 300 incorporates two parameters to ensure performance accuracy: the signal confidence value and the ambient noise floor. The signal confidence value, in an embodiment set to a default of $3/\sqrt{16}$, is used to assess the reliability of signal returns in different scenarios. The ambient noise floor, in an embodiment set to a default of $7/\sqrt{16}$, allows the circuit to adjust for noise variations that might influence ranging measurements.

The circuit begins its calculations with two square root operations. The first square root circuit processes the ambient output signal, while the second processes the expected signal rate. The square root values are multiplied by the ambient noise floor and signal confidence values, respectively.

The outputs of the multiplications are summed together. The sum is divided by the expected signal rate. The final step involves squaring the result of this division.

The output of the circuit is the inverse distance integration time, provided in seconds. This value represents the integration time required to achieve the specified maximum ranging distance with the minimum target reflectance, considering the current ambient conditions and expected signal strength.

By performing these calculations, the inverse distance calculator circuit 300 ensures that the ToF device can maintain optimal performance while adapting to changing environmental conditions in real-time. The resulting integration time balances the need for accurate distance measurements with the goal of minimizing power consumption.

In embodiments, the inverse distance calculator circuit 300 is configured to compute the inverse distance integration time (IDMAX) using the ambient output signal and the expected signal rate at the maximum ranging distance (DMAX) provided by the signal scaler circuit 200. These inputs can be calculated in events per second per bin, allowing the system to account for variations in ambient light conditions and expected signal returns.

In embodiments, the inverse distance calculator circuit 300 is configured to consider the signal confidence value (SCONF) and ambient noise floor (ACONF) to ensure performance accuracy. These components enable the circuit to determine the inverse distance (IDMAX) dynamically.

The signal confidence value is used to assess the reliability of signal returns in different scenarios, aligned with the photon return signal (PRS) valid range assumption.

The ambient noise floor parameter allows the circuit to adjust for noise variations that might influence ranging measurements. It reflects the ambient conditions processed through histogram assumptions.

The inverse distance calculator circuit 300 ensures that the calculated distance aligns with current environmental and device-specific variables by factoring in signal confidence and ambient noise considerations. The integration allows the ToF device to maintain optimal performance while adapting to changing conditions in real-time.

To arrive at an equation for the inverse distance integration time (IDMAX), attention is directed at U.S. Patent No. 11,120,104, U.S. Patent No. 11,797,645, and U.S. Patent App. No. 18/466,522, commonly owned by the same assignee as the present disclosure and incorporated herein by reference in their entirety.

In these references, the maximum ranging distance (DMAX) calculation is used to devise the maximum ranging distance for the current ambient conditions at a specified target reflectance. Here, the maximum ranging distance is specified as an input with the target reflectance to determine the integration time.

Accordingly, from the following equation, as derived from U.S. Patent No. 11,120,104, U.S. Patent No. 11,797,645, and U.S. Patent App. No. 18/466,522:

$$\left[\left(\frac{D_{CAL}}{D_{MAX}}\right)^2 \times SD_{CAL} \times \frac{REF}{REFD_{CAL}}\right] - \left[S_{CONF} \times \sqrt{\left(\frac{D_{CAL}}{D_{MAX}}\right)^2 \times SD_{CAL} \times \frac{REF}{REFD_{CAL}}}\right] = A_{CONF} \times \sqrt{AMBIENT}$$

and substituting the expected signal rate (SDMAX) and the integration time (I) into the equation, we arrive at:

$$[SD_{MAX} \times I] - [S_{CONF} \times \sqrt{SD_{MAX} \times I}] = A_{CONF} \times \sqrt{AMBIENT \times I} .$$

We arrive at the following equation when dividing by the square root and rearranging for the inverse distance:

$$ID_{MAX} = \left[\frac{(A_{CONF} \times \sqrt{AMBIENT}) + (S_{CONF} \times \sqrt{SD_{MAX}})}{SD_{MAX}}\right]^2 .$$

Figure 3 illustrates an example implementation of the inverse distance calculator circuit 300 for calculating the equation for the inverse distance.

The first square root circuit 302 receives as input the ambient output signal (AMBIENT) from the signal scaler circuit 200 and generates the corresponding square root value ( $\sqrt{AMBIENT}$ ), which is multiplied through the first multiplier circuit 306 with the ambient noise floor (ACONF) to arrive at ( $A_{CONF} \times \sqrt{AMBIENT}$ ).

The second square root circuit 304 receives as input the expected signal rate (SDMAX) from the signal scaler circuit 200. It generates the corresponding square root value ( $\sqrt{SD_{MAX}}$ ), which is multiplied through the second multiplier circuit 308 with the signal confidence value (SCONF) to arrive at ( $S_{CONF} \times \sqrt{SD_{MAX}}$ ).

The summing circuit 310 receives as inputs the outputs of the first multiplier circuit 306 and the second multiplier circuit 308 and combines them to arrive at ( $A_{CONF} \times \sqrt{AMBIENT}$ ) + ( $S_{CONF} \times \sqrt{SD_{MAX}}$ ) .

The division circuit 312 receives as inputs the output of the summing circuit 310 and the expected signal rate (SDMAX) from the signal scaler circuit 200. It performs a vision operation to arrive at

$$\frac{(A_{CONF} \times \sqrt{AMBIENT}) + (S_{CONF} \times \sqrt{SD_{MAX}})}{SD_{MAX}} .$$

Finally, the exponentiation circuit 314 computes the square value of the value provided by the division circuit 312 to arrive at $\left[\dfrac{\left(A_{CONF}\times\sqrt{AMBIENT}\right)+\left(S_{CONF}\times\sqrt{SD_{MAX}}\right)}{SD_{MAX}}\right]^2$ , which is provided as the inverse distance integration time (IDMAX) at the output of the inverse distance calculator circuit 300. In embodiments, the inverse distance integration time (IDMAX) is provided in seconds.

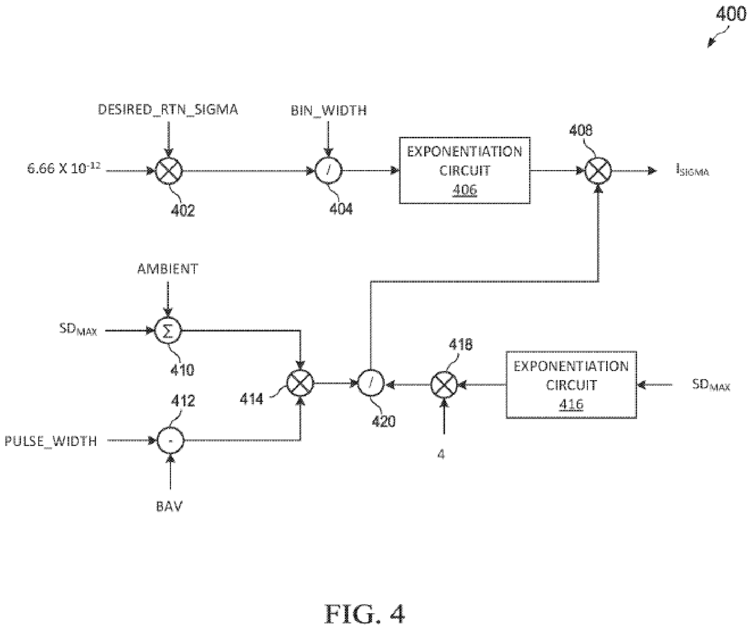

Figure 4 illustrates a block diagram of an embodiment inverse sigma calculator circuit 400, which can be implemented as the inverse sigma calculator circuit 106. The inverse sigma calculator circuit 400 includes a first multiplier circuit 402, a first division circuit 404, a first exponentiation circuit 406, a second multiplier circuit 408, a summing circuit 410, a subtracting circuit 412, a third multiplier circuit 414, a second exponentiation circuit 416, a fourth multiplier circuit 418, and a second division circuit 420, which may (or may not) be arranged as shown. Inverse distance calculator circuit 300 may include additional components not shown. The inverse sigma calculator circuit 400 processes inputs through multiple stages to calculate the integration time needed to achieve a specified measurement precision.

In U.S. Patent No. 11,120,104, U.S. Patent No. 11,797,645, and U.S. Patent App. No. 18/466,522, the sigma estimator is used to estimate the range measurement noise and sigma for the range output. Here, the desired sigma is specified as an input to calculate the integration time.

Assuming that the phase-weighted filtered histogram includes a first part (A), a second part (B), and a third part (C), the phase sigma calculation equation, as disclosed in the aforementioned patents and applications, can be derived as:

$$\sigma_{PHASE} = \sqrt{\left(\frac{C+A}{4\times\left(\left(\frac{B}{BAV}\right)-AMBIENT\right)^2}\right)+\left(\frac{(C-A)^2\times\left(\left(\frac{B}{BAV}\right)-AMBIENT\right)}{4\times\left(\left(\frac{B}{BAV}\right)-AMBIENT\right)^4}\right)}$$ , where $\sigma_{PHASE}$ is the live sigma phase and **bav** is the width of the second part (B) in the phase-weighted filtered histogram. It should be noted that the terms in the incorporated patents and applications can be ignored as they relate to crosstalk, which is irrelevant in the maximum distance context.

The phase-weighted filtered histogram algorithm employs a specific positioning strategy for the first part (A), the second part (B), and the third part (C). The algorithm deliberately positions these parts to minimize the difference between the first part (A) and the third part (C) before calculating the final sub-bin phase to achieve precise range measurements.

The relationship between the first part (A) and the third part (C) can depend on the exact pulse shape and phase relative to the histogram bins. In some ranges, the first part (A) and the third part (C) will be exactly equal, though the specific ranges where this occurs is typically unknown a priori before performing the actual range measurement. The uncertainty can arise from the complex interaction between the pulse characteristics and the discrete nature of the histogram binning.

While perfect equality between the first part (A) and the third part (C) is not guaranteed at all ranges, the algorithm systematically minimizes their difference. The systematic minimization can result in small perturbations of the first part (A) and the third part (C) about zero, which provides the device with sub-bin resolution capability. Accordingly, given that the algorithm actively works to minimize these differences treating the first part (A) and the third part (C) as equal can serve as a reasonable approximation for the integration time calculations.

The approximation simplifies the sigma calculation while maintaining the essential characteristics of the measurement system's precision capabilities. The small variations from this approximation can contribute to the sub-bin resolution but do not significantly impact the overall integration time determination.

Further, the phase-weighted filtered histogram can employ a rectangular pulse representation with a width defined by the VCSEL pulse width in bins and a signal amplitude measured in counts per bin. The histogram consists of three key regions (i.e., the first part (A), the second part (B), and the third part (C), where the second part (B) has a width of one bin and represents the median bin of the pulse. In optimal conditions, the pulse is centered such that its midpoint aligns with the center of the second part (B), creating a symmetrical distribution across the histogram.

The symmetrical alignment results in the number of counts in the first part (A) to equal those in the third part (C). The total signal contribution can be expressed as the sum of the third part (C) and the first part (A), which represents the total counts in the pulse minus the counts in the second part (B). The total count value can **be** calculated by multiplying the sum of the signal per bin and ambient per bin by the difference between the pulse width and the width of the second part (B) **(i.e.,** PULSE WIDTH - BAV).

The phase sigma calculation utilizes this relationship in its denominator, which considers four times the square of the signal counts in the second part (B), adjusted for ambient light. Given the symmetrical nature of the pulse distribution and the deliberate alignment of the histogram regions, setting the first part (A) and the third part (C) as equal provides a mathematically sound simplification while maintaining the essential characteristics of the phase measurement. The simplification leads to the final form of the phase sigma equation, which incorporates both the signal and ambient light contributions to accurately reflect the measurement precision.

By setting the first part (A) equal to the third part (C), the phase sigma calculation can be simplified to:

$$\sigma_{PHASE} = \sqrt{\left(\frac{C+A}{4 \times \left(\left(\frac{B}{BAV}\right) - AMBIENT\right)^2}\right)} \quad , \quad \text{which is equal to:}$$

$$\sqrt{\left(\frac{(SIGNAL\_PER\_BIN + AMB\_PER\_BIN) \times (PULSE\_WIDTH - BAV)}{4 \times SIGNAL\_PER\_BIN^2}\right)} .$$

The system multiplies the expected signal rate (SDMAX) and ambient output signal (AMBIENT) by the integration time ($I_{SIGMA}$) to convert from event rates to actual event counts. Accordingly, the phase sigma equation can be represented as:

$$\sigma_{PHASE} = \sqrt{\left(\frac{(SIGNAL\_PER\_BIN + AMB\_PER\_BIN) \times (PULSE\_WIDTH - BAV)}{4 \times SIGNAL\_PER\_BIN^2}\right)} =$$

$$\sqrt{\left(\frac{(SD_{MAX} + AMBIENT) \times I_{SIGMA} \times (PULSE\_WIDTH - BAV)}{4 \times (SD_{MAX} \times I_{SIGMA})^2}\right)} .$$

The phase sigma equation expresses the relationship between signal counts, ambient counts, and pulse characteristics. After incorporating the integration time to convert rates to counts, the equation can be simplified by dividing the numerator and the denominator by the integration time. This manipulation yields an expression for phase sigma equation that includes the integration time as an input parameter:

$$\sigma_{PHASE} = \sqrt{\left(\frac{(SD_{MAX} + AMBIENT) \times (PULSE\_WIDTH - BAV)}{4 \times I_{SIGMA} \times (SD_{MAX})^2}\right)} .$$

However, the system requires a different approach-instead of calculating the phase sigma equation for a given integration time, it needs to determine the integration time required to achieve a desired sigma value. The equation can be solved for the inverse sigma integration time through algebraic rearrangement, making it the output parameter rather than an input: $I_{SIGMA} = \frac{1}{\sigma_{PHASE}^2} \times \left(\frac{(SD_{MAX} + AMBIENT) \times (PULSE\_WIDTH - BAV)}{4 \times (SD_{MAX})^2}\right)$ .

The final transformation involves converting between units of measurement. While the phase sigma is initially expressed in units of phase/bins, users typically specify the desired precision in millimeters:

$\sigma_{PHASE} = \frac{DESIRED\_RTN\_SIGMA \times 6.66 \times 10^{-12}}{BIN\_WIDTH}$ , where *DESIRED_RTN_SIGMA* is the user-specified expected sigma for a target reflectance in millimeters and *BIN_WIDTH* is the width of an individual histogram bin in a user-specified unit of time (e.g., picoseconds).

The system employs a conversion factor using the width of the second part (B) and the speed of light (represented by the constant 6.66 × 10-12) to express the relationship between phase sigma and the desired range precision in millimeters: $I_{SIGMA} = \frac{1}{\left(\frac{DESIRED\_RTN\_SIGMA \times 6.66 \times 10^{-12}}{BIN\_WIDTH}\right)^2} \times \frac{(SD_{MAX} + AMBIENT) \times (PULSE\_WIDTH - BAV)}{4 \times (SD_{MAX})^2}$ .

The first multiplier circuit 402 receives two inputs: the constant value 6.66 × 10-12 and the expected sigma for a target reflectance in millimeters (DESIRED_RTN_SIGMA), multiplying these values together. The output of this multiplication feeds into the first division circuit 404, which divides the result by the width of the individual histogram bin (BIN_WIDTH).

A first exponentiation circuit 406 processes the output from the first division circuit 404, raising the value to a second power to generate a scaling factor. This result feeds into the second multiplier circuit 408.

In parallel, the circuit processes signal-related inputs through a separate path. A summing circuit 410 combines the expected signal rate (SDMAX) with the ambient signal (AMBIENT). The subtracting circuit 412 receives the pulse width (PULSE_WIDTH) and the width of the second part (B) as inputs, subtracting the width of the second part (B) from the pulse width. The third multiplier circuit 414 multiplies the outputs from the summing circuit 410 and the subtracting circuit 412.

A second exponentiation circuit 416 processes the expected signal rate (SDMAX) input separately. Its output is multiplied by a constant value of 4 through the fourth multiplier circuit 418. The results from the third multiplier circuit 414 and the fourth multiplier circuit 418 feed into the second division circuit 420, whose output is coupled to the second multiplier circuit 408 where it is multiplied by the result from the first exponentiation circuit 406 to produce the inverse sigma integration time (ISIGMA).

Through this series of mathematical operations, the inverse sigma calculator circuit 400 implements the inverse sigma integration time equation, calculating the integration time needed to achieve the desired measurement precision under current operating conditions.

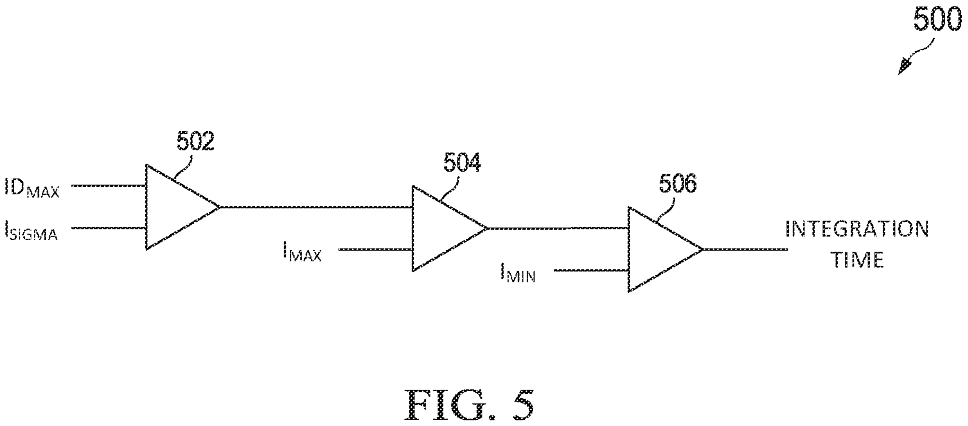

Figure 5 illustrates a block diagram of an embodiment selection/limiting logic circuit 500, which can be implemented as the selection/limiting logic circuit 108. Selection/limiting logic circuit 500 includes a first comparator 502, a second comparator 504, and a third comparator 506, which may (or may not) be arranged as shown. Selection/limiting logic circuit 500 may include additional components not shown.

The selection/limiting logic circuit 500 is configured to select the most conservative integration time between the inverse distance integration time (IDMAX) provided by the inverse distance calculator circuit 104 and the inverse sigma integration time (ISIGMA) provided by the inverse sigma calculator circuit 106.

The first comparator 502 receives the inverse distance integration time (IDMAX) and the inverse sigma integration time (ISIGMA) at its inputs. In response to the inverse sigma integration time (ISIGMA) being greater than the inverse distance integration time (IDMAX), the integration time is set to the inverse sigma integration time (ISIGMA); otherwise, the integration time is set to the inverse distance integration time (IDMAX) .

In embodiments, a flag is set (e.g., in a register) indicating which of the two calculated integration times has been selected. For example, a flag can be set to one if the inverse sigma integration time (ISIGMA) is selected and set to zero if the inverse distance integration time (IDMAX) is selected.

The second comparator 504 and the third comparator 506 provide a clipping function, where the selected integration time at the output of the first comparator 502 is compared against predefined minimum and maximum bounds. If the selected integration time exceeds these limits, the integration time is clipped to fall within the acceptable range.

In embodiments, the second comparator 504 compares the selected integration time with the maximum integration time (IMAX). In response to the selected integration time being greater than the maximum, the integration time is set to the maximum; otherwise, the integration time remains at the value of the selected integration time. In embodiments, the maximum integration time is set to 15.5 milliseconds.

In embodiments, the third comparator 506 compares the selected integration time with the minimum integration time (IMIN). If the selected integration time is less than the minimum, it is set to the minimum; otherwise, it remains at the selected integration time value. In embodiments, the minimum integration time is set to 4 milliseconds.

The output of the third comparator 506 is provided as the integration time. In embodiments, the integration time is provided in seconds.

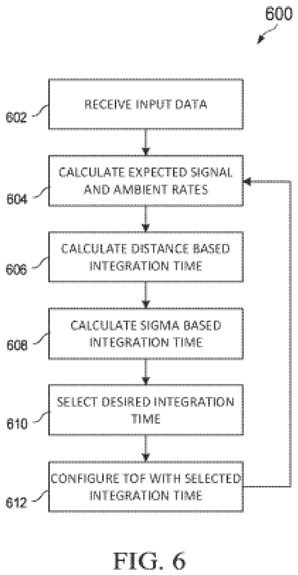

Figure 6 illustrates a flow chart of an embodiment method 600 for dynamically determining the integration time of a ToF device to optimize power consumption and guarantee specified ranging performance. In embodiments, the integration time is dynamically adjusted based on the ambient conditions, target reflectances, or a combination thereof. It is noted that all steps outlined in the flow chart of the method are not necessarily required and can be optional. Further, changes to the arrangement of the steps, removal of one or more steps and path connections, and addition of steps and path connections are similarly contemplated.

At step 602, the calibration data and user inputs are received. The calibration data may include parameters such as calibrated distance (DCAL), signal strength at the calibration distance (SDCAL), and reflectance at calibration (REFDCAL). User inputs may include minimum reflectance (REF), maximum sigma, minimum value of the maximum ranging distance (DMAX), and minimum and maximum integration time bounds.

At step 604, the expected signal and ambient rates are calculated using, for example, a signal scaler circuit. The signal scaler circuit processes the inputs from calibration data, user specifications, and current measurements to generate scaled outputs. It adjusts the calibrated signal strength based on the ratio between the desired minimum and calibration reflectance. The circuit then scales this adjusted signal according to the inverse square law of distance, accounting for the difference between the calibration distance and the desired maximum ranging distance.

The circuit scales the current ambient measurements for ambient light to account for the desired minimum reflectance. Signal and ambient calculations are normalized to per-bin rates based on the number of histogram bins used in the device.

The circuit may also apply additional scaling factors for system-specific parameters, such as effective SPAD (Single-Photon Avalanche Diode) scaling. These calculations result in an expected signal rate and an expected ambient rate at the maximum ranging distance for a target with the minimum specified reflectance, providing crucial inputs for subsequent integration time calculations.

At step 606, a first integration time is calculated based on a distance parameter using the expected signal and ambient rates. An inverse distance calculator circuit can perform the calculation, which determines the integration time needed to achieve the specified maximum ranging distance with a minimum target reflectance.

The first integration time is primarily influenced by four key parameters: the ambient noise floor constant, the expected ambient rate at the maximum ranging distance, the signal confidence constant, and the expected signal rate at the maximum ranging distance. These parameters collectively account for the relationship between the signal strength and the ambient light levels to achieve reliable distance measurements at the specified maximum range. The calculation balances the effects of ambient light interference and signal strength to ensure accurate distance detection while optimizing power consumption.

At step 608, a second integration time is calculated based on a sigma parameter using the expected signal rate, ambient rate, and the maximum sigma specified by the user. An inverse sigma calculator circuit can perform the calculation, which determines the integration time needed to achieve the specified measurement precision.

At step 610, a desired integration time is selected based on the first and second integration times. Typically, the longer of the two calculated integration times is chosen to ensure both distance and precision requirements are met.

In embodiments, a flag indicates which integration time is selected. For example, if the second integration time (based on the sigma parameter) is selected, the flag may be set to one; if the first integration time (based on the distance parameter) is selected, the flag may be set to zero. The flag can be used for diagnostic purposes or to inform subsequent processing steps about which parameter (distance or precision) currently limits the integration time.

The selected integration time is then limited between the minimum and maximum integration time bounds specified by the user. This ensures the integration time falls within the device's acceptable operational limits.

At step 612, the ToF device is configured to operate using the determined desired integration time. This step can include updating device settings or parameters to implement the new integration time. The method may loop back to step 604 for the next measurement frame, allowing for continuous adaptation to changing ambient conditions and ranging requirements.

A dynamic integration time controller for ToF devices offers significant advantages, with power optimization being a key benefit. By dynamically adjusting the integration time based on current ambient conditions and target reflectance, the system minimizes power consumption while maintaining specified ranging performance requirements.

In low ambient light conditions or when measuring highly reflective nearby objects, the device can use shorter integration times. This reduction in integration time directly translates to lower power consumption, as the device remains active for shorter periods during each measurement cycle. Conversely, the system automatically increases the integration time in bright conditions or when measuring distant or less reflective objects to maintain the specified performance levels.

The adaptive approach stands in contrast to traditional ToF devices that use fixed integration times. Such fixed-time systems are typically set to ensure performance under worst-case conditions, often resulting in unnecessary power consumption when conditions are more favorable. The dynamic integration time controller eliminates this inefficiency by continuously optimizing the device's operation.

Further, the proposed system allows users to specify their desired performance parameters, such as maximum ranging distance, minimum target reflectance, and desired range precision. The approach then meets these requirements while using the minimum necessary integration time. The userconfigurable aspect enables the optimization of power consumption across a wide range of applications and use cases.

The power optimization achieved through dynamic control is particularly advantageous for mobile and portable applications where battery life can be a concern. By reducing power consumption without compromising performance, the system can extend the operational time of battery-powered ToF devices, enhancing the practicality and usability in various fields such as augmented reality, automotive sensing, and industrial automation.

Overall, the power optimization advantage of this disclosure represents an advantageous step forward in ToF technology, offering a more efficient and adaptable solution that balances performance requirements with energy conservation.

While the proposed approach provides a mathematically robust way of implementing a dynamically adjusting integration time controller, simplified mechanisms may also be deployed in certain applications. One such simplified approach involves the use of a look-up table of integration times versus ambient signal levels. This method represents the simplest implementation of the dynamic integration time control concept.

However, it is important to note that these simplified methods, while potentially easier to implement, would be suboptimal compared to the full algorithmic approach. The look-up table method, for example, may not account for all the nuances and variables that the full algorithm considers, potentially leading to less precise adjustments of the integration time.

Another alternative implementation could involve applying a similar method to reduce the Vertical Cavity Surface Emitting Laser (VCSEL) power. However, this approach would typically be less efficient and more challenging to implement in the types of ToF systems under consideration. The complexity arises from adjusting VCSEL power, which involves different trade-offs and considerations compared to adjusting integration time.

The alternative implementations highlight the flexibility of the overall concept of dynamic integration time control. While the full algorithmic approach offers a more precise and adaptable solution, simplified versions may be suitable for applications where computational resources are limited or where the highest level of precision is not required. The choice between the full algorithm and simplified alternatives would depend on the specific requirements and constraints of the ToF system in question.

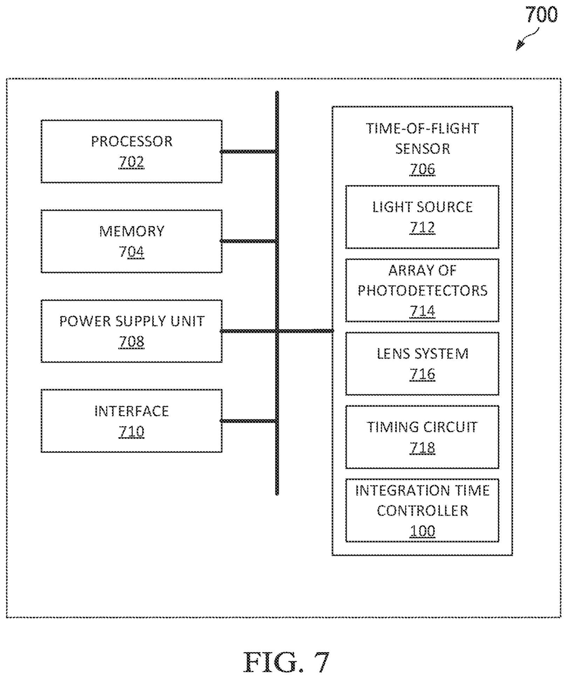

Figure 7 illustrates a block diagram of an embodiment system 700. System 700 includes a processor 702, a memory 704, a time-of-flight (ToF) sensor 706, a power supply unit (PSU) 708, and an interface 710, which may (or may not) be arranged as shown. Although one of each (i.e., the processor 702, the memory 704, the ToF sensor 706, the power supply unit 708, and the interface 710) is shown in Figure 7, the number of components is not limiting, and greater numbers are similarly contemplated in other embodiments.

System 700 may include additional components not depicted, such as long-term storage (e.g., non-volatile memory, etc.), power management circuitry, security and encryption modules (e.g., trusted platform modules (TPM), etc.), a global positioning satellite (GPS) sensor, transmitters, receivers, cameras, or the like. System 700 may be an electronic device, such as a smartphone, a tablet, a laptop, a smartwatch, a vehicle, or any system or sub-system capable of hosting the ToF sensor 706.

In embodiments, each component can communicate with any other component internally within or external to the system 700. For example, each component can communicate using the I2C (Inter-Integrated Circuit), alternatively known as I2C or IIC, communication protocol, the I3C (Improved Inter Integrated Circuit) communication protocol, the serial peripheral interface (SPI) specification, or the like.

Processor 702 may be any component or collection of components adapted to perform computations or other processingrelated tasks. In embodiments, processor 702 is an application processor, a baseband processor, or a microcontroller.

Memory 704 may be any component or collection of components adapted to store programming or instructions for execution by processor 702. In an embodiment, memory 704 includes a non-transitory computer-readable medium. Memory 704 can store calibration data, user inputs, and measurement results.

ToF sensor 706 measures the distance between it and objects in its field of view by utilizing the speed of light. ToF sensor 706 emits a light signal, which travels to the target object, reflects off it, and then is captured back by the ToF sensor 706. The time taken for this round trip is measured-and because the speed of light is constant, the distance to the object can be calculated accurately by the ToF sensor 706 using this time measurement.

ToF sensor 706 includes a light source 712, typically an infrared (IR) LED, a laser diode, or a vertical-cavity surfaceemitting laser (VCSEL). The light source 712 emits a light signal towards an object to be measured. In embodiments, ToF sensor 706 uses a continuous wave of light (i.e., indirect time-of-flight (iToF)). In embodiments, ToF sensor 706 uses pulsed light signals (i.e., direct time-of-flight (dToF) applications).

On the receiving end of the signal is an array of photodetectors 714 sensitive to the specific wavelength of the emitted light. ToF sensor 706 may include a lens system 716 to focus the emitted light into a beam and ensure that reflected light is directed onto the array of photodetectors 714. In embodiments, the array of photodetectors 714 is a Single-Photon Avalanche Diode (SPAD) detection array. ToF sensor 706 may include additional components not shown, such as memory, a microcontroller, and a VCSEL driver.

ToF sensor 706 may include a timing circuit 718 for accurately measuring the interval between when the light is emitted and when it is detected after reflection. In embodiments, timing circuit 718, in concert with processor 702, provides the signals to operate the ToF sensor 706 (e.g., transmission of the light signal and reception of the reflected light signal).

The integration time controller 100 is coupled to the processor 702, the light source 712, and the array of photodetectors 714. It receives inputs from processor 702, including current ambient light levels and reflectance estimates. The integration time controller 100 can access calibration data and user inputs stored in memory 704.

Based on these inputs, the integration time controller 100 calculates the optimal integration time for each measurement frame. The integration time controller 100 can adjust the operation of the light source 712 and the array of photodetectors 714 to implement the calculated integration time.

The light source 712 emits light pulses according to the integration time set by the integration time controller 100. These pulses are reflected off objects in the scene and return to the array of photodetectors 714. The array of photodetectors 714 operates for the duration specified by the integration time, capturing the returned light pulses.

The timing circuit 7168 measures the time between the emission of light pulses and their detection, providing this information to processor 702. The processor 702 uses this timing data and the known integration time to calculate accurate distance measurements.

In embodiments, processor 702 receives data from the ToF sensor 706, interprets the timing data, and converts it into distance measurements. Processor 702 may apply algorithms to refine the data, compensating for factors like ambient light noise or object reflectivity variations to provide more reliable distance information. ToF sensor 706 may be a multi-zone ToF sensor that can measure distances in several separate zones, such as 4 x 4, 8 x 8, or 16 x 16 zones.

The integration time controller 100 continuously updates the integration time for each measurement frame. It can increase the integration time in high ambient light conditions or when measuring distant or less reflective objects. Conversely, it can decrease the integration time in low light conditions or when measuring nearby or highly reflective objects.

The dynamic adjustment allows the system 700 to maintain specified ranging performance while optimizing power consumption. The system 700 can achieve longer ranging distances and better measurement precision in favorable conditions, while still meeting performance requirements in challenging environments.

The system 700 can be applied in various applications, such as autofocus assist, augmented reality/virtual reality, proximity detection, automotive sensing, and industrial automation. The dynamic integration time control enables the system to adapt to different ambient light conditions and object reflectance characteristics encountered in these diverse applications.

In embodiments, ToF sensor 706 includes a dedicated processor embedded within. In embodiments, the dedicated processor embedded within the ToF sensor 706 performs some or the entirety of the algorithms generally stated to be executed by processor 702 in the present disclosure. For brevity, the internal processor of the ToF sensor 706 is not detailed.

Power supply unit 708 may be any component or collection of components that provide power to one or more components within the system 700. Power supply unit 708 may include various power management circuitry, charge storage components (**i.e.,** battery), and the like.

Interface 710 may be any component or collection of components that allow processor 702 to communicate with other devices/components or a user. For example, interface 710 may be adapted to allow a user or ToF sensor 706 to interact/communicate with the system 700.

A first aspect relates to a system for controlling integration time in a time-of-flight (ToF) device, the system comprising a signal scaler configured to receive calibration data and user inputs, and calculate an expected signal rate and ambient rate; a distance parameter calculator configured to calculate a first integration time based on the expected signal rate and ambient rate; a sigma parameter calculator configured to calculate a second integration time based on the expected signal rate, ambient rate, and maximum sigma; and an integration time controller configured to select a desired integration time based on the first and second integration times, wherein the ToF device is configured to operate at the desired integration time.

In a first implementation form of the system, according to the first aspect as such, the calibration data includes a calibrated distance, a signal strength at the calibrated distance, and a reflectance at calibration.

In a second implementation form of the system, according to the first aspect as such or any preceding implementation form of the first aspect, the user inputs include a minimum reflectance, a maximum sigma, and a minimum value of a maximum ranging distance.

In a third implementation form of the system, according to the first aspect as such or any preceding implementation form of the first aspect, the signal scaler is further configured to adjust the expected signal rate based on an inverse square law of distance.

In a fourth implementation form of the system, according to the first aspect as such or any preceding implementation form of the first aspect, the distance parameter calculator is configured to calculate the first integration time based on a signal confidence value and an ambient noise floor.

In a fifth implementation form of the system, according to the first aspect as such or any preceding implementation form of the first aspect, the sigma parameter calculator is configured to calculate the second integration time based on a pulse width and a bin width of the ToF device.

In a sixth implementation form of the system, according to the first aspect as such or any preceding implementation form of the first aspect, the integration time controller is further configured to: set a flag indicating whether the first integration time or the second integration time was selected; and limit the desired integration time between a minimum and maximum integration time.

A second aspect relates to a method for controlling integration time in a time-of-flight (ToF) device, the method comprising receiving calibration data and user inputs;

> calculating an expected signal rate and ambient rate;
> calculating a first integration time based on a distance parameter using the expected signal rate and ambient rate;
> calculating a second integration time based on a sigma parameter using the expected signal rate, ambient rate, and maximum sigma;
> selecting a desired integration time based on the first and second integration times; and configuring the ToF device to operate at the desired integration time.

In a first implementation form of the method, according to the second aspect as such, the method further comprising updating the expected signal rate and ambient rate for each measurement frame of the ToF device.

In a second implementation form of the method, according to the second aspect as such or any preceding implementation form of the second aspect, calculating the expected signal rate includes scaling a calibrated signal strength based on a ratio between a desired minimum reflectance and a calibration reflectance.

In a third implementation form of the method, according to the second aspect as such or any preceding implementation form of the second aspect, selecting the desired integration time includes choosing the longer of the first integration time and the second integration time.

In a fourth implementation form of the method, according to the second aspect as such or any preceding implementation form of the second aspect, the method further comprises setting a flag to indicate whether the first integration time or the second integration time was selected as the desired integration time; and limiting the desired integration time between a minimum and maximum integration time.

In a fifth implementation form of the method, according to the second aspect as such or any preceding implementation form of the second aspect, the calibration data includes a calibrated distance, a signal strength at the calibrated distance, and a reflectance at calibration.

In a sixth implementation form of the method, according to the second aspect as such or any preceding implementation form of the second aspect, the user inputs include a minimum reflectance, a maximum sigma, and a minimum value of a maximum ranging distance.

A third aspect relates to a non-transitory computer-readable storage media storing computer instructions for determining integration time in a time-of-flight (ToF) device that, when executed by a processor, causes the processor to receive calibration data and user inputs; calculate an expected signal rate and ambient rate; calculate a first integration time based on a distance parameter using the expected signal rate and ambient rate; calculate a second integration time based on a sigma parameter using the expected signal rate, ambient rate, and maximum sigma; select a desired integration time based on the first and second integration times; and output the desired integration time for configuring the ToF device.

In a first implementation form of the non-transitory computer-readable storage media, according to the third aspect as such, of claim 15, the instructions further cause the processor to update the expected signal rate and ambient rate for each measurement frame of the ToF device.

In a second implementation form of the non-transitory computer-readable storage media, according to the third aspect as such or any preceding implementation form of the third aspect, calculating the expected signal rate includes scaling a calibrated signal strength based on a ratio between a desired minimum reflectance and a calibration reflectance.

In a third implementation form of the non-transitory computer-readable storage media, according to the third aspect as such or any preceding implementation form of the third aspect, selecting the desired integration time includes choosing the longer of the first integration time and the second integration time.

In a fourth implementation form of the non-transitory computer-readable storage media, according to the third aspect as such or any preceding implementation form of the third aspect, the instructions further cause the processor to set a flag to indicate whether the first integration time or the second integration time was selected as the desired integration time; and limit the desired integration time between a minimum and maximum integration time.

In a fifth implementation form of the non-transitory computer-readable storage media, according to the third aspect as such or any preceding implementation form of the third aspect, the calibration data includes a calibrated distance, a signal strength at the calibrated distance, and a reflectance at calibration, and wherein the user inputs include a minimum reflectance, a maximum sigma, and a minimum value of a maximum ranging distance.

Although the description has been described in detail, it should be understood that various changes, substitutions, and alterations may be made without departing from the spirit and scope of this disclosure as defined by the appended claims. The same elements are designated with the same reference numbers in the various figures. Moreover, the scope of the disclosure is not intended to be limited to the particular embodiments described herein, as one of ordinary skill in the art will readily appreciate from this disclosure that processes, machines, manufacture, compositions of matter, means, methods, or steps, presently existing or later to be developed, may perform substantially the same function or achieve substantially the same result as the corresponding embodiments described herein. Accordingly, the appended claims are intended to include within their scope such processes, machines, manufacture, compositions of matter, means, methods, or steps.

The specification and drawings are, accordingly, to be regarded simply as an illustration of the disclosure as defined by the appended claims, and are contemplated to cover any and all modifications, variations, combinations, or equivalents that fall within the scope of the present disclosure.

**Claims**

1. A system for controlling integration time in a time-of-flight (ToF) device, the system comprising:

    a distance parameter calculator circuit configured to calculate a first integration time;
    a sigma parameter calculator circuit configured to calculate a second integration time based; and
    an integration time controller configured to select a desired integration time based on the first and second integration times,
wherein the ToF device is configured to operate at the desired integration time.

2. A method for controlling integration time in a time-of-flight (ToF) device, the method comprising:

calculating a first integration time based on a distance parameter;
calculating a second integration time based on a sigma parameter;
selecting a desired integration time based on the first and second integration times; and
configuring the ToF device to operate at the desired integration time.

3. A non-transitory computer-readable storage media storing computer instructions for determining integration time in a time-of-flight (ToF) device that, when executed by a processor, causes the processor to:

calculate a first integration time based on a distance parameter;
calculate a second integration time based on a sigma parameter;
select a desired integration time based on the first and second integration times; and
output the desired integration time for configuring the ToF device.

4. The system of claim 1 further comprising a signal scaler circuit configured to perform, or the method further comprising, or the media of claim 3 that when executed by a processor causes the processor to perform:

receiving calibration data and user inputs; and
calculating an expected signal rate and ambient rate,
wherein the calculation of said first integration time uses the expected signal rate and ambient rate; and
wherein the calculation of said second integration time uses using the expected signal rate, ambient rate, and maximum sigma.

5. The system or the method or the media of claim 4, wherein the calibration data includes a calibrated distance, a signal strength at the calibrated distance, and a reflectance at calibration.

6. The system or the method or the media of claim 4 or 5, wherein the user inputs include a minimum reflectance, a maximum sigma, and a minimum value of a maximum ranging distance.

7. The system, method or media of at least one corresponding previous system, method or media claims as dependent on claim 4, wherein the expected signal rate is adjusted based on an inverse square law of distance.

8. The system, method or media, of at least one corresponding previous system, method or media claims, wherein the first integration time is calculated based on a signal confidence value and an ambient noise floor.

9. The system, method or media, of at least one corresponding previous system, method or media claims, wherein the second integration time is calculated based on a pulse width and a bin width of the ToF device.

10. The system, method or media, of at least one corresponding previous system, method or media claims, wherein:

a flag, indicating whether the first integration time or the second integration time was selected as the desired integration time, is set; and
the desired integration time is limited between a minimum and maximum integration time.

11. The system, method or media, of at least one corresponding previous system, method or media claims as dependent on claim 4, wherein the expected signal rate and ambient rate are updated for each measurement frame of the ToF device.

12. The system, method or media, of at least one corresponding previous system, method or media claims as dependent on claim 4, wherein calculating the expected signal rate includes scaling a calibrated signal strength based on a ratio between a desired minimum reflectance and a calibration reflectance.

13. The system, method or media, of at least one corresponding previous system, method or media claims, wherein selecting the desired integration time includes choosing the longer of the first integration time and the second

integration time.

FIG. 1

EP 4 752 596 A1

FIG. 2

FIG. 3

EP 4 752 596 A1

FIG. 4

EP 4 752 596 A1

FIG. 5

600

602 — RECEIVE INPUT DATA

604 — CALCULATE EXPECTED SIGNAL AND AMBIENT RATES

606 — CALCULATE DISTANCE BASED INTEGRATION TIME

608 — CALCULATE SIGMA BASED INTEGRATION TIME

610 — SELECT DESIRED INTEGRATION TIME

612 — CONFIGURE TOF WITH SELECTED INTEGRATION TIME

FIG. 6

700

PROCESSOR
702

MEMORY
704

POWER SUPPLY UNIT
708

INTERFACE
710

TIME-OF-FLIGHT
SENSOR
706

LIGHT SOURCE
712

ARRAY OF
PHOTODETECTORS
714

LENS SYSTEM
716

TIMING CIRCUIT
718

INTEGRATION TIME
CONTROLLER
100

FIG. 7

**EUROPEAN SEARCH REPORT**

Application Number

EP 25 21 9412

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/393250 A1 (TEYSSIER JEREMIE [FR] ET AL) 7 December 2023 (2023-12-07) | 1-3, 8-11,13 | INV. G01S7/486 |
| A | * the whole document * | 4-7,12 | G01S7/487 |
| X | US 2022/003864 A1 (NOSE YUGO [JP] ET AL) 6 January 2022 (2022-01-06) * abstract *; figures 2, 4-6, 11, 12 * * paragraph [0030] - paragraph [0077] * | 1-3, 8-11,13 | |
| X | US 2022/268942 A1 (KAIZU SHUN [JP] ET AL) 25 August 2022 (2022-08-25) * abstract *; figures 3A-3B, 12, 15-21 * * paragraph [0004] - paragraph [0008] * * paragraph [0057] - paragraph [0058] * * paragraph [0142] - paragraph [0198] * | 1-3 | |
| X,P | WO 2025/224608 A1 (COGNISEA INC [US]) 30 October 2025 (2025-10-30) * abstract *; figures 4, 8,, 29-34 * * page 1, line 22 - page 5, line 32 * * page 21, line 29 - page 22, line 2 * * page 45, line 23 - page 58, line 20 * | 1-3 | TECHNICAL FIELDS SEARCHED (IPC) G01S |
| X,P | US 2025/208270 A1 (PARK SEONGHYEOK [KR] ET AL) 26 June 2025 (2025-06-26) * abstract *; figures 1-4 * * paragraph [0002] - paragraph [0010] * * paragraph [0035] - paragraph [0099] * | 1-3 | |

The present search report has been drawn up for all claims

| Place of search | Date of completion of the search | Examiner |
|---|---|---|
| Munich | 30 March 2026 | Zaneboni, Thomas |

EPO FORM 1503 03.82 (P04C01)

## ANNEX TO THE EUROPEAN SEARCH REPORT
## ON EUROPEAN PATENT APPLICATION NO.

EP 25 21 9412

This annex lists the patent family members relating to the patent documents cited in the above-mentioned European search report.
The members are as contained in the European Patent Office EDP file on
The European Patent Office is in no way liable for these particulars which are merely given for the purpose of information.

30-03-2026

| Patent document cited in search report | Publication date | Patent family member(s) | Publication date |
|---|---|---|---|
| US 2023393250 A1 | 07-12-2023 | EP 4286888 A1 | 06-12-2023 |
| | | FR 3136283 A1 | 08-12-2023 |
| | | US 2023393250 A1 | 07-12-2023 |
| US 2022003864 A1 | 06-01-2022 | CN 113614566 A | 05-11-2021 |
| | | JP 7149505 B2 | 07-10-2022 |
| | | JP WO2020196257 A1 | 02-12-2021 |
| | | US 2022003864 A1 | 06-01-2022 |
| | | WO 2020196257 A1 | 01-10-2020 |
| US 2022268942 A1 | 25-08-2022 | US 2022268942 A1 | 25-08-2022 |
| | | WO 2021010174 A1 | 21-01-2021 |
| WO 2025224608 A1 | 30-10-2025 | NONE | |
| US 2025208270 A1 | 26-06-2025 | KR 20250098541 A | 01-07-2025 |
| | | US 2025208270 A1 | 26-06-2025 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 709791
- US 11120104 B
- US 11797645 B
- US 466522